# EUROPÄISCHE PATENTSCHRIFT

(11) **EP 2 982 893 B1**
(45) Veröffentlichungstag und Bekanntmachung des Hinweises auf die Patenterteilung: **10.01.2018**
(21) Anmeldenummer: 14180024.3
(22) Anmeldetag: 06.08.2014
(51) Int. Cl.: F16L 33/02, F16L 33/207, F16L 13/14

(54) **Rohrklemmanordnung**
Tube clamp assembly
Dispositif de serrage de tuyau

(43) Veröffentlichungstag der Anmeldung: 10.02.2016
(73) Patentinhaber: Geberit International AG, 8645 Jona (CH)
(72) Erfinder: Lippuner, Marc, 8645 Jona (CH); Graf, Pascal, 8132 Egg bei Zürich (CH); Bachmann, Bastian Marc, 8852 Altendorf (CH)
(74) Vertreter: Frischknecht, Harry Ralph

(56) Entgegenhaltungen:
- EP-A1- 2 497 989
- GB-A- 1 598 309
- US-A1- 2005 264 002
- US-A1- 2006 082 156
- US-A1- 2011 163 537

## Beschreibung

### TECHNISCHES GEBIET

Die vorliegende Erfindung betrifft eine Rohrklemmanordnung nach dem Oberbegriff von Anspruch 1.

### STAND DER TECHNIK

Aus dem Stand der Technik sind Rohrklemmanordnungen mit Klemmringen bekannt. Typischerweise umfassen Klemmringe ein Ohr, das mit einer Zange zusammenpressbar ist um den Klemmring auf einem zu verbindenden Rohrende festzuziehen. Beim Zusammenpressen des Ohrs schliesst sich ein Spalt des Klemmringes, wobei das zu verbindende Rohrende im Bereich dieses Spaltes nicht beaufschlagt wird. Die Pressung des Rohrendes ist deshalb ungleichmässig, was die Dichtigkeit der Verbindung beeinträchtigt. In der DE 20 2006 006 746 wird eine Rohrklemmanordnung gezeigt, welche kein Ohr, sondern je ein Verriegelungselement an den beiden Enden Klemmring oder der Schelle aufweist. Beim Spannen des Klemmrings werden die beiden Verriegelungselemente miteinander verbunden. Nachteilig an der technischen Lehre der DE 20 2006 006 746 ist, dass sich das Material im Bereich der beiden Verriegelungselemente radial nach aussen bewegen kann, was für die Dichtigkeit zwischen der Rohrklemmanordnung und dem Rohr ein Nachteil darstellt. Weiter wird das Verriegelungselement bei der Herstellung der Verriegelung leicht asymmetrisch verformt, was ebenfalls ein Nachteil für die Dichtwirkung darstellt.

US 2011/0163537 A1 offenbart eine Rohrklemme nach dem Oberbegriff vom Anspruch 1.

### DARSTELLUNG DER ERFINDUNG

Ausgehend von diesem Stand der Technik liegt der Erfindung eine Aufgabe zugrunde, eine Rohrklemme anzugeben, welche die Nachteile des Standes der Technik überwindet. Insbesondere soll die Rohrklemme einfacher bezüglich ihrer Dichtigkeit dimensionierbar sein.

Diese Aufgabe löst der Gegenstand vom Anspruch 1. Demgemäss umfasst eine Rohrklemme zum Verbinden eines Rohres ein in ein Ende des Rohres einsteckbares Anschlussstück, eine Klemmschelle mit einem mindestens abschnittsweise, vorzugsweise vollständig, um das Anschlussstück umlaufenden ringförmigen Klemmabschnitt, wobei die Klemmschelle mittels eines Verpressvorgangs von einer Ausgangslage in eine Klemmlage bringbar ist. Der Klemmabschnitt ist beim Verpressvorgang plastisch deformierbar, derart, dass eine Radialkraft gegen das Rohr bzw. das Anschlussstück bereitstellbar ist. Weiter umfasst die Rohrklemme weiter ein Zwischenelement, wobei das Zwischenelement mindestens zwei sich von einem Mittelsteg erstreckende Führungsflächen aufweist, wobei die Klemmschelle mindestens mit ihren Endbereichen an den Führungsflächen anliegt, und wobei der Radialabstand der Führungsfläche zur Mittelachse mit zunehmendem Abstand von einer Begrenzungskante zum Mittelsteg hin grösser wird, so dass die Klemmschelle eine Durchmesserveränderung erfährt, wenn die Endbereiche von der Ausgangslage im Bereich der Begrenzungskante in ihre Klemmlage im Bereich des Mittelsteges bewegt werden.

Durch die plastische Deformation des Klemmabschnittes kann ein kraftschlüssiges Einwirken auf das Rohr und das Anschlussstück bereitgestellt werden. Hierdurch kann die Dichtigkeit zwischen Rohr und Anschlussstück besser beeinflusst sowie dimensioniert werden.

In einer Weiterbildung liegt die Klemmschelle mit dem Klemmabschnitt in Verschlusslage kraftschlüssig direkt an der Aussenseite des Rohrs an.

In einer anderen Weiterbildung umfasst die Rohrklemme weiterhin mindestens eine Spannhülse, auf welche der Klemmabschnitt einwirkt und über welche die Klemmschelle in Verschlusslage indirekt an der Aussenseite des Rohrs anliegt.

In einer anderen Weiterbildung umfasst die Rohrklemme weiterhin mindestens zwei, insbesondere genau zwei, Spannhülsen, auf welche der Klemmabschnitt einwirkt und über welche die Klemmschelle in Verschlusslage indirekt an der Aussenseite des Rohrs anliegt.

Besonders bevorzugt ist Spannhülse bzw. sind die Spannhülsen plastisch deformierbar ausgebildet. Es werden also in den Varianten mit Spannhülse nicht nur der Klemmabschnitt, sondern auch die Spannhülse plastisch, also dauerhaft, verformt.

In einer besonders bevorzugten Ausführung sind die Klemmabschnitte der Klemmschelle mindestens zwei oder genau zwei beabstandet zueinander angeordnete Klemmringe, welche Klemmringe über einen Verbindungsabschnitt miteinander in Verbindung stehen. Die Klemmringe erstrecken sich vorzugsweise ganz oder mindestens teilweise um den Umfang des Rohrs.

Vorzugsweise weist der Klemmring einen runden oder rechteckigen Querschnitt auf.

Besonders bevorzugt weist der Klemmabschnitt zwei Endbereiche auf. Zwei Klemmabschnitte bzw. zwei Klemmringe stehen dann über einen Verbindungsabschnitt, der sich den Endbereichen anschliesst, miteinander in Verbindung.

Mit anderen Worten wird der radial Abstand zwischen der Führungsfläche und der Rohroberfläche mit zunehmendem Abstand vom Mittelsteg kleiner bzw. mit kleiner werdendem Abstand zum Mittelsteg hin grösser.

Besonders bevorzugt werden die Verbindungsabschnitte und/oder die Endbereiche auf den Führungsflächen geführt.

Das Zwischenelement ist vorzugsweise separat von der Klemmschelle ausgebildet. Unter separat wird verstanden, dass das Zwischenelement keinen integralen Bestandteil der Klemmschelle bildet. Besonders bevorzugt steht das Zwischenelement aber mit dem Gehäuse in Verbindung.

Alternativ oder zusätzlich zur Lagerung am Gehäuse liegt das Zwischenelement zwischen der mindestens einen Spannhülse und der Klemmschelle, wobei das Zwischenelement so an der Rohrklemme gelagert ist.

Weitere Ausführungsformen sind in den abhängigen Ansprüchen angegeben.

Eine alternative Variante einer Rohrklemme zum Verbinden eines Rohres umfasst ein in ein Ende des Rohres einsteckbares Anschlussstück, sowie eine Klemmschelle mit einem mindestens abschnittsweise, vorzugsweise vollständig, um das Anschlussstück umlaufenden ringförmigen Klemmabschnitt, wobei die Klemmschelle mittels eines Verpressvorgangs von einer Ausgangslage in eine Klemmlage bringbar ist. Der Klemmabschnitt ist beim Verpressvorgang plastisch deformierbar, derart, dass eine Radialkraft gegen das Rohr bzw. das Anschlussstück bereitstellbar ist. Die Klemmschelle weist Tangentialabschnitte auf, welche sich von den Endbereichen des mindestens einen Klemmabschnittes tangential erstrecken. Die Tangentialabschnitte erstrecken sich vorzugsweise über den Umfang des Rohrs hinaus, so dass diese von einem Werkzeug ergreifbar sind.

Vorzugsweise schliessen sich den Tangentialabschnitten gegenüber der Klemmabschnitte die Verbindungsabschnitte an.

Vorzugsweise umfasst die Rohrklemme weiter ein Gehäuse, in oder an welchem die Spannhülse ggf. das Zwischenelement gelagert sind.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Rohrklemmanordnung nach einer ersten Ausführungsform;
- Fig. 2: eine perspektivische Ansicht der Rohrklemmanordnung nach Figur 1 in Ausgangslage;
- Fig. 3: eine perspektivische Explosionsansicht der Rohrklemmanordnung nach Figur 1;
- Fig. 4: eine perspektivische Ansicht einer Rohrklemmanordnung nach einer zweiten Ausführungsform;
- Fig. 5: eine perspektivische Ansicht der Rohrklemmanordnung nach Figur 4 in Ausgangslage;
- Fig. 6: eine perspektivische Explosionsansicht der Rohrklemmanordnung nach Figur 4;
- Fig. 7: eine perspektivische Ansicht einer Rohrklemmanordnung gemäss einem Beispiel;
- Fig. 8: eine perspektivische Ansicht der Rohrklemmanordnung nach Figur 7 in Ausgangslage;
- Fig. 9: eine perspektivische Explosionsansicht der Rohrklemmanordnung nach Figur 7;
- Fig. 10: eine perspektivische Ansicht einer Rohrklemmanordnung nach einem Beispiel;
- Fig. 11: eine perspektivische Ansicht der Rohrklemmanordnung nach Figur 10 in Ausgangslage; und
- Fig. 12: eine perspektivische Explosionsansicht der Rohrklemmanordnung nach Figur 10.

### BESCHREIBUNG BEVORZUGTER AUSFÜHRUNGSFORMEN

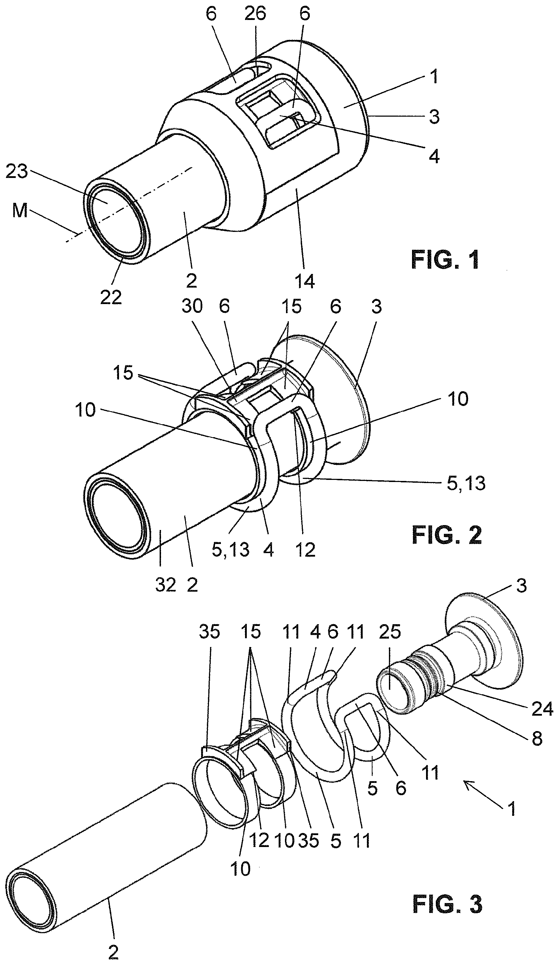

In den Figuren 1 bis 12 werden verschiedene Ausführungsformen einer Rohrklemme 1 zum Verbinden eines Rohrs 2 mit einem in ein Rohr 2 einsteckbares Anschlussstück 3 gezeigt. Unter Bezugnahme auf alle Figuren werden nun diese Ausführungsformen gemeinsam erläutert. Spezifische Merkmale von spezifischen Ausführungsformen werden dann unter Bezugnahme auf die entsprechenden Figuren genauer erläutert.

Das Rohr 2 ist im Wesentlichen zylindrisch ausgebildet und erstreckt sich entlang einer Mittelachse M. Das Rohr 2 kann beispielsweise als Wasserleitung dienen. Das Rohr 2 begrenzt mit einer umlaufenden Seitenwand 22 einen Rohrinnenraum 23. Das Rohr 2 ist vorzugsweise ein Verbundrohr und umfasst mehrere Schichten. Das Rohr 2 kann aber auch ein anderes Rohr sein. Das Rohr 2 wird mit dem Anschlussstück 3 mit Hilfe der Klemmschelle 4 der Rohrklemme 1 verbunden.

Das Anschlussstück 3, welches mit dem Rohr 2 verbunden werden soll, ist im Wesentlichen zylindrisch ausgebildet und erstreckt sich ebenfalls entlang einer Mittelachse M. Das Anschlussstück 3 bildet mit einer umlaufenden Seitenwand 24 einen Hohlraum 25. Im verbundenen Zustand mündet der Rohrinnenraum 23 in den Hohlraum 25. Das Anschlussstück kann verschiedenartig ausgebildet sein. Aussenseitig weist das Anschlussstück auf der Seitenwand 24 Rillen 8 auf, welche einen Lagerungsabschnitt bzw. eine Dichtstruktur bereitstellen. Im Bereich dieser Dichtstruktur wirkt die Klemmeschelle 4 auf das Rohr 2 ein.

Das Rohr 2 und das Anschlussstück 3 werden mit einer Rohrklemme 1 miteinander verbunden. Dabei ragt das Anschlussstück 3 mit einem Abschnitt in den Rohrinnenraum 23 ein und erstreckt sich soweit in den Rohrinnenraum 23 ein, dass ein Lagerungsabschnitt des Anschlussstückes 3 in den Wirkungsbereich der Rohrklemme 1 bzw. der Klemmschelle 4 zu liegen kommt. Die Rohrklemme 1 kann dann gemäss der untenstehenden Beschreibung verpresst werden und bringt dabei eine Klemmkraft auf das Rohr 2 und das Anschlussstück 3 auf, sodass das Rohr 2 zum Anschlussstück 3 geklemmt wird. Der maximale Aussendurchmesser des Lagerungsbereichs des Anschlussstückes 3 ist etwas kleiner oder gleich dem Aussendurchmesser des Rohres 2 gewählt.

Die Rohrklemme 1 umfasst ein in ein Ende des Rohres 2 einsteckbares Anschlussstück 3 und eine Klemmeschelle 4 mit einem mindestens abschnittsweise um das Anschlussstück 3 umlaufenden ringförmigen Klemmabschnitt 5. Der Klemmabschnitt 5 kann je nach Ausführung sich aber auch vollständig um das Anschlussstück 3 bzw. das Rohr 2 herum erstrecken. Der Klemmabschnitt 5 ist mittels eines Verpressvorgangs von einer Ausgangslage in eine Klemmlage bringbar. Der Verpressvorgang wird vorzugsweise mit einem Werkzeug ausgeführt. Von der Ausganslage wird der Klemmabschnitt 5 verformt, wobei dann der Durchmesser der Klemmschelle 4 verkleinert wird.

Der Klemmabschnitt 5 ist beim Verpressvorgang plastisch deformierbar. Das heisst, dass sich der Klemmabschnitt 5 der Klemmschelle 4 bleibend bzw. dauerhaft verformt und dass der Klemmabschnitt 5 diese verformte Lage dauerhaft einnimmt. Durch die plastische Deformierung ist eine Radialkraft gegen das Rohr 2 bzw. das Anschlussstück 3 bereitstellbar. Das Rohr 2 wird gegen das in das Rohr 2 einragende Anschlusstück 3 gepresst.

In einer nicht dargestellten Ausführungsform liegt die Klemmschelle 4 mit dem Klemmabschnitt 5 in Verschlusslage kraftschlüssig direkt an der Aussenseite 32 des Rohrs 2 an. Die Klemmschelle 4 steht also in direktem Kontakt zum Rohr 2.

In den in den Figuren 1 bis 12 gezeigten Ausführungsformen umfasst die Rohrklemme 1 mindestens eine Spannhülse 10. In der ersten und der dritten Ausführungsform sind zwei in Richtung der Mittelachse M beabstandet zueinander angeordnete Spannhülsen 10 angeordnet. Diese Spannhülsen 10 kann man auch als ringförmige Spannhülsen 10 bezeichnen. In der zweiten und vierten Ausführungsform ist jeweils eine einzige Spannhülse 10 angeordnet, welche eine grössere Länge aufweist als die Spannhülsen 10 der anderen Ausführungsformen. Die Spannhülse 10 ist rohrörmig mit einem kreisrunden Querschnitt, welcher in der Verpresslage, gleichmässig über seinen Umfang verpresst wird, ausgebildet.

In den gezeigten Ausführungsformen mit mehreren Spannhülsen 10 entspricht die Zahl der Spannhülsen 10 der Zahl der Klemmabschnitte 5. Vorzugsweise ist also pro Spannhülse 10 jeweils ein Klemmabschnitt 5 angeordnet. Es kann aber auch eine Spannhülse 10 mit mehreren Klemmabschnitten 5 geklemmt werden.

Der Klemmabschnitt 5 der Klemmschelle 4 wirkt auf die Spannhülse 10 ein. Über die Spannhülse 10 wird die besagte Radialkraft auf das Rohr 2 und das Anschlussstück 3 übertragen. Die Klemmschelle steht bei diesen Ausführungsformen indirekt über die Spannhülse 10 mit dem Rohr 2 in Verbindung.

Die Spannhülse 10 ist, wie die Klemmabschnitte 5 der Klemmschelle 4, plastisch deformierbar ausgebildet. Folglich sind sowohl die Klemmabschnitte 5 als auch die Spannhülse 10 selbst plastisch deformierbar ausgebildet, was der Dichtigkeit und vor allem der Dauerhaftigkeit einer dichten Verbindung äusserst zuträglich ist. Darüber hinaus lässt sich auch die Dichtverbindung besser dimensionieren.

Weiter umfasst die Klemmschelle 4 Verbindungsabschnitte 6, die sich dem Klemmabschnitt 5 anschliessen. Jedem Endbereich 11 des Klemmabschnittes 5 ist ein Verbindungsabschnitt 5 zugeordnet. Über die Verbindungsabschnitte 6 werden die Klemmabschnitte 5 miteinander verbunden.

Die Verbindungsabschnitt 6 haben zudem die Funktion der Bereitstellung eines Angriffspunktes für ein Werkzeug. Das Werkzeug ist dabei derart ausgebildet, dass dieses eine Kraft auf die Verbindungsabschnitte 6 bereitstellt und die Verbindungsabschnitte 6 relativ zueinander verschiebt, wobei durch diese Verschiebung der Klemmabschnitt 5 von der Ausgangslage in die Klemmlage plastisch verformt wird. Je nach Ausführungsform werden die Verbindungsabschnitte 6 aufeinander zu oder voneinander weg bewegt, um die Verkleinerung des Klemmabschnittes 5 zu erreichen.

Der Klemmabschnitt 5 umfasst vorzugsweise mindestens zwei oder genau zwei beabstandet zueinander angeordnete Klemmringe 13. Die Klemmringe 13 stehen dabei über den Verbindungsabschnitt 6 miteinander in Verbindung. Die Klemmringe 13 erstrecken sich in den gezeigten Ausführungsformen teilweise oder vollständig um den Umfang des Rohrs 2 bzw. des Anschlussstückes 3.

Die Zahl der Klemmringe 13 entspricht der Zahl der Spannhülsen 10 oder ist grösser als die Zahl der Spannhülsen 10.

Der Klemmring 13 kann einen runden oder rechteckigen Querschnitt aufweisen.

Weiter umfasst die Rohrklemme 1 nach allen Ausführungsformen besonders bevorzugt ein Gehäuse 14. Das Zwischenelement 7 ist dabei am oder im Gehäuse 14 gelagert. Besonders bevorzugt ist das Zwischenelement 7 teilweise in das Gehäuse eingelassen. Das Gehäuse 14 ist besonders bevorzugt aus Kunststoff. Das Gehäuse 14 umfasst mindestens eine Aussparung 26, über welche die beiden Verbindungsabschnitte 6 zugänglich sind. Die Aussparung 26 bzw. deren Rand kann als Führung für ein Werkzeug dienen.

Weiter ist das Gehäuse 14 bevorzugt am Anschlussstück 3 gelagert.

Weiter wird vorzugsweise die Klemmschelle 4 am Zwischenelement 7 gelagert, sowie dies oben erläutert wurde. Die Klemmschelle 4 ist vorzugsweise durch das Gehäuse 14 mindestens teilweise überdeckt.

Unter Bezugnahme auf die Figuren 1 und 3 sowie auf die oben genannte Beschreibung werden nun spezifische Merkmal der ersten Ausführungsform der Rohrklemme 1 erläutert.

In der Figur 1 wird die Rohrklemme 1 mit dem Gehäuse 14 gezeigt. In der Figur 1 werden die Verbindungsabschnitte 6 in ihrer Ausgangslage gezeigt. Die Verbindungsabschnitte 6 werden bei der Klemmung von der Ausgangslage in die Klemmlage bewegt und der Abstand zwischen den beiden Verbindungsabschnitte 6 verringert sich entsprechend.

In der Figur 2 wird die Rohrklemme gemäss der ersten Ausführungsform ohne das Gehäuse 14 gezeigt. Hier befindet sich die Klemmschelle 4 ebenfalls in ihrer Ausgangslage.

Die Rohrklemme 1 nach der ersten Ausführungsform umfasst, wie dies in der Figur 2 ersichtlich ist, weiter ein Zwischenelement 7. Das Zwischenelement 7 weist mindestens zwei, hier pro Seite zwei, sich von einem Mittelsteg 30 erstreckende Führungsflächen 15 auf. Die Klemmschelle 4 liegt mindestens mit ihren Endbereichen 11, hier teilweise mit den Verbindungsabschnitten 6 an den Führungsflächen 15 an. Der Radialabstand der Führungsfläche 15 zur Mittelachse M wird mit zunehmendem Abstand von einer Begrenzungskante 12 zum Mittelsteg 30 hin grösser, so dass die Klemmschelle 4 eine Durchmesserveränderung erfährt, wenn die Endbereiche 11 bzw. die Verbindungsabschnitte 6 von der Ausgangslage im Bereich der Begrenzungskante 12 in ihre Klemmlage im Bereich des Mittelsteges 30 bewegt werden.

Das Zwischenelement 7 ist separat von der Klemmschelle 4 ausgebildet, steht aber mit dieser in Kontakt.

Bei der Klemmung, werden die Verbindungsabschnitte 6 in Richtung des Mittelsteges 30 bewegt. Hierdurch wird der Klemmabschnitt 5 bzw. der Innendurchmesser der Klemmschelle 4 durch das Bewegen der Verriegelungsabschnitte 6 von der Ausgangslage in die Klemmlage verkleinert und es wird die besagte Radialkraft bereitgestellt.

Das Zwischenelement 7 steht hier mit den beiden Klemmabschnitten 5 in Kontakt und wird nach aussen hin durch die Klemmschelle 4 teilweise überdeckt. Hierdurch und auch durch den Kontakt mit dem Gehäuse 14 wird das Zwischenelement an der Rohrklemme 1 gehalten.

Weiter weist das Zwischenelement 7 Führungsstege 35 auf, welche die Führungsflächen 15 seitlich begrenzen.

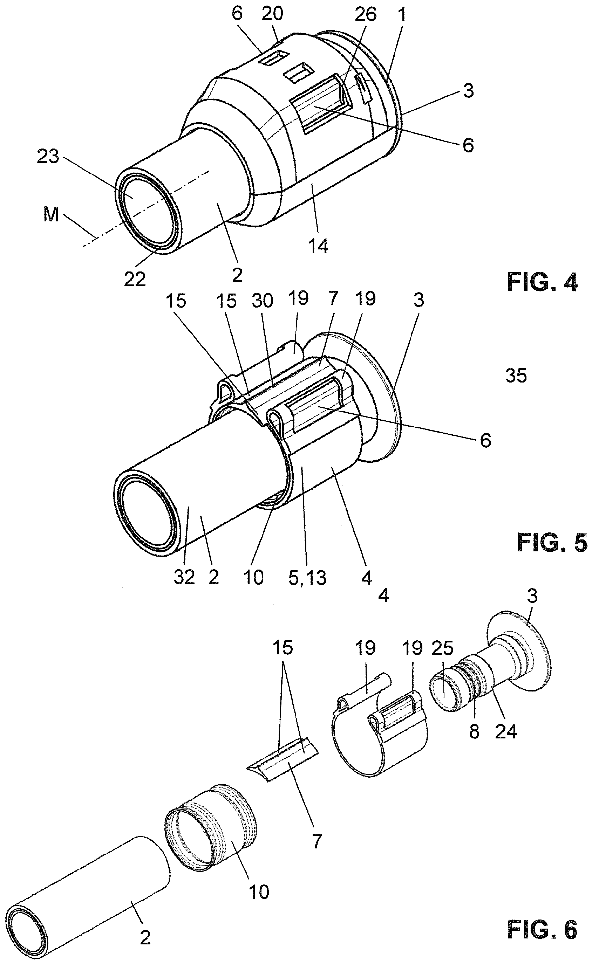

In den Figuren 4 bis 7 wird eine zweite Ausführungsform der vorliegenden Erfindung gezeigt. Unter Bezugnahme auf die Figuren 4 bis 7 sowie auf die oben genannte Beschreibung werden nun spezifische Merkmal der zweiten Ausführungsform der Rohrklemme 1 erläutert.

Die Rohrklemme 1 nach der zweiten Ausführungsform unterscheidet sich im Wesentlichen durch die Ausbildung der Klemmschelle 4 und der Spannhülse 10.

Die Klemmschelle 4 ist hier als Stanzteil ausgebildet und weist einen rechteckigen Querschnitt im Bereich des Klemmabschnittes 5 auf. Die Spannhülse weist ebenfalls einen im Wesentlichen rechteckigen Querschnitt auf und erstreckt sich entlang der Mittelachse M gesehen im Wesentlichen über die gleiche Länge wie der Klemmabschnitt 5.

Im Endbereich 11 der Klemmabschnitte 5 weist die Klemmschelle 4 hier jeweils eine Lasche 19 auf. Die Lasche 19 hat eine sehr ähnliche Funktion wie der Verbindungsabschnitt bezüglich der Interaktion mit einem Werkzeug. Ein Werkzeug kann an die Lasche 19 angreifen und so die beiden Laschen 19 relativ zum feststehenden Zwischenelement 7 in Richtung des Mittelsteges 30 bewegen, wobei aufgrund der Führungsfläche 15 am Zwischenelement 7 eine Veränderungen des Durchmessers des Verbindungsabschnittes 6 erreicht wird.

In Richtung der Mittelachse M gesehen weist der Klemmabschnitt 5 eine im Wesentlichen gleiche Ausdehnung auf wie die Spannhülse 10. Es ist in dieser Ausführungsform eine einzige Spannhülse 10 und ein einziger Klemmabschnitt 5 angeordnet. Die Spannhülse 10 weist zudem noch umlaufende Rillen 36 auf, welche die Dichtwirkung weiter verbessern.

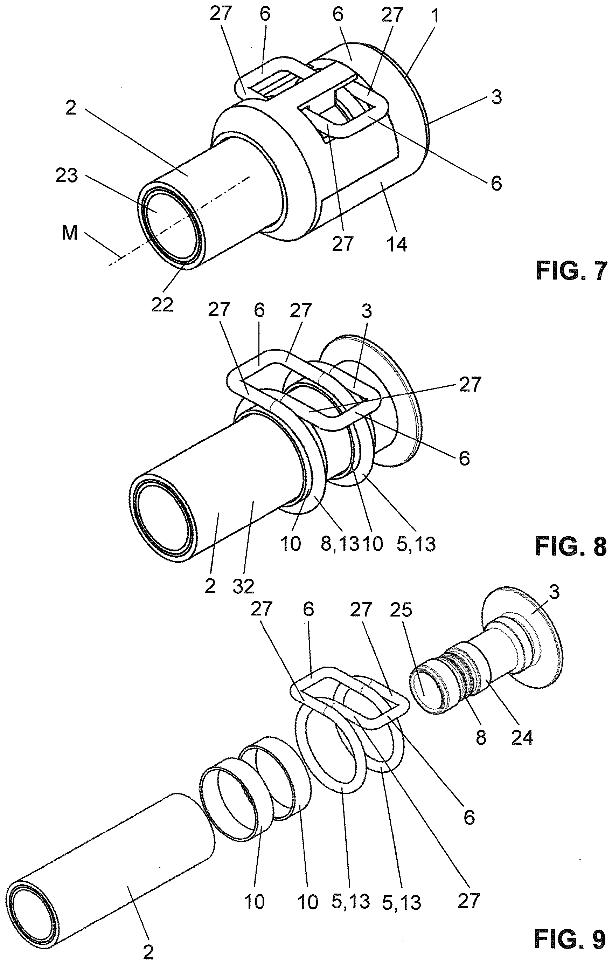

In den Figuren 7 bis 9 wird ein Beispiel einer Rohrklemme gezeigt. Unter Bezugnahme auf die Figuren 7 bis 9 sowie auf die oben genannte Beschreibung werden nun spezifische Merkmale dieses Beispiels der Rohrklemme 1 erläutert.

Die Rohrklemme 1 nach diesem Beispiel unterscheidet sich von der ersten Ausführungsform im Wesentlichen durch die Ausbildung der Klemmschelle 4. Die Klemmschelle 4 ist hier so ausgebildet, dass auch die Anordnung des Zwischenelementes 7 verzichtet werden kann. Die Klemmschelle 4 umfasst hier sich den Endbereichen 11 anschliessende Tangentialabschnitte 27. Die Tangentialabschnitte 27 erstrecken sich tangential zu den um die Mittelachse M sich herum erstreckende Klemmabschnitte 5 bzw. Klemmringe 13. Die Tangentialabschnitte 27 stehen über einen Verbindungsabschnitt 6 miteinander in Verbindung.

Bei der Verpressung werden die Verbindungsabschnitte 6 zusammen mit dem Tangentialabschnitten 27 voneinander weg bewegt, wobei so der Durchmesser des Klemmabschnittes 5 verkleinert wird. Es handelt sich als bei der Bewegung von der Ausgangslage in die Klemmlage um eine umgekehrte Bewegung im Vergleich zu der ersten und der zweiten Ausführungsform.

Der Klemmabschnitt 5 der Klemmschelle 4 wird auch bei diesem Beispiel plastisch, also bleibend, verformt. Der Klemmabschnitt 5 erstreckt sich in diesem Beispiel vollständig um den Umfang des Rohrs 2 bzw. des Anschlussstückes 3 herum. Zwischen Klemmabschnitt 5 und der Oberfläche des Rohrs 2 ist mindestens eine, hier zwei, Spannhülsen 10 angeordnet. Die Klemmabschnitte 5 wirken auf die Spannhülsen 10.

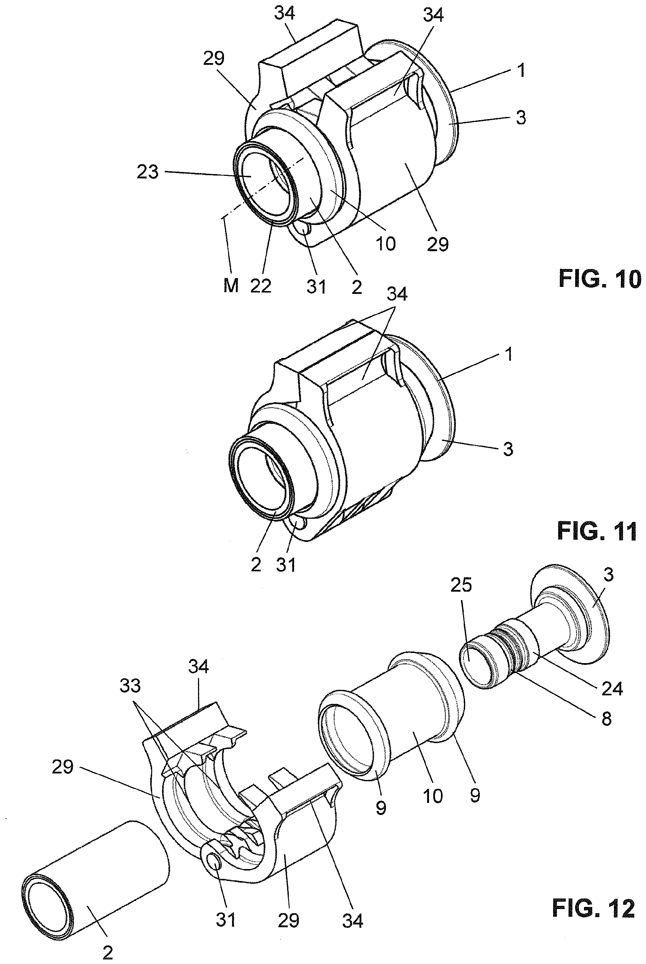

In den Figuren 10 bis 12 wird eine weitere Ausführungsform einer Rohrklemme 1 gezeigt. Gleiche Teile tragen gleiche Bezugszeichen und es wird auf die Ausführungen der vorherigen Ausführungsformen verwiesen.

Die Rohrklemme 1 nach den Figuren 10 bis 12 umfasst ein in ein Ende des Rohres 2 einsteckbares Anschlussstück 3 und eine Klemmschelle 4 mit einem mindestens abschnittsweise, vorzugsweise vollständig, um das Anschlussstück 3 umlaufenden ringförmigen Klemmabschnitt 5, wobei die Klemmschelle 4 mittels eines Verpressvorgangs von einer Ausgangslage in eine Klemmlage bringbar ist. Die Rohrklemme 1 umfasst weiterhin mindestens eine Spannhülse 10. Die Spannhülse 10 ist dabei verformbar und stellt durch die Verformbarkeit eine Radialkraft auf das Rohr 2 und auf das Anschlussstück 3 bereit. Die Klemmschelle 4 ist als Einwegteil ausgebildet, wobei die Klemmschelle 4 mit dem Klemmabschnitt 5 auf die Spannhülse 10 einwirkt und diese plastisch verformt. Die Klemmschelle 4 ist von der Klemmlage in eine Wegwerflage bewegbar, in welcher die Klemmschelle 4 von der Rohrklemme 1 entfernbar ist.

Die Klemmschelle 4 umfasst in der gezeigten Ausführungsform zwei Klemmbacken 29, welche über ein Scharnier 31 miteinander in Verbindung stehen. Die Klemmbacken 29 weisen eine Presskontur 33 auf, mit welcher die Klemmschelle 4 auf die Spannhülse 10 einwirkt. Die Halbschalen 29 weisen gegenüber des Scharniers Aufnahmeabschnitte 34 auf, an welchen ein Werkzeug platziert werden kann.

In der Figur 10 wird die Klemmschelle 4 vor dem Verpressvorgang gezeigt. In der Figur 11 liegen die Klemmbacken 29 in der Verpresslage.

Endseitig weist die Spannhülse 10 noch zwei umlaufende Flansche 9 auf. Die Flansche 9 dienen als Führungshilfe für die Anordnung der Klemmschelle 4 mit den Klemmbacken 29.

**BEZUGSZEICHENLISTE**

| | | | |
|---|---|---|---|
| 1 | Rohrklemme | 31 | Scharnier |
| 2 | Rohr | 32 | Aussenseite |
| 3 | Anschlussstück | 33 | Presskontur |
| 4 | Klemmschelle | 34 | Aufnahmeabschnitte |
| 5 | Klemmabschnitt | 35 | Führungsstege |
| 6 | Verbindungsabschnitt | 36 | Rillen |
| 7 | Zwischenelement | | |
| 8 | Rillen | | |
| 9 | Flansch | | |
| 10 | Spannhülse | | |
| 11 | Endbereich | | |
| 12 | Begrenzungskante | | |
| 13 | Klemmringe | | |
| 14 | Gehäuse | | |
| 15 | Führungsfläche | | |
| 19 | Lasche | | |
| 22 | Seitenwand | | |
| 23 | Rohrinnenraum | | |
| 24 | Seitenwand | | |
| 25 | Hohlraum | | |
| 26 | Aussparung | | |
| 27 | Tangentialabschnitte | | |
| 29 | Klemmbacken | | |
| 30 | Mittelsteg | | |

## Patentansprüche

1. Rohrklemme (1) zum Verbinden eines Rohres (2) umfassend
ein in ein Ende des Rohres (2) einsteckbares Anschlussstück (3),
eine Klemmschelle (4) mit einem mindestens abschnittsweise, vorzugsweise vollständig, um das Anschlussstück (3) umlaufenden ringförmigen Klemmabschnitt (5), wobei die Klemmschelle (4) mittels eines Verpressvorgangs von einer Ausgangslage in eine Klemmlage bringbar ist,
wobei der Klemmabschnitt (4) beim Verpressvorgang plastisch deformierbar ist, derart, dass eine Radialkraft gegen das Rohr (2) bzw. das Anschlussstück (3) bereitstellbar ist, wobei die Rohrklemme (1) weiter ein Zwischenelement (7) umfasst,
**dadurch gekennzeichnet, dass** das Zwischenelement (7) mindestens zwei sich von einem Mittelsteg (30) erstreckende Führungsflächen (15) aufweist, wobei die Klemmschelle (4) mindestens mit ihren Endbereichen (11) an den Führungsflächen (15) anliegt, und wobei der Radialabstand der Führungsfläche (15) zur Mittelachse (M) mit zunehmendem Abstand von einer Begrenzungskante (12) zum Mittelsteg (30) hin grösser wird, so dass die Klemmschelle (4) eine Durchmesserveränderung erfährt, wenn die Endbereiche (11) von der Ausgangslage im Bereich der Begrenzungskante (12) in ihre Klemmlage im Bereich des Mittelsteges (30) bewegt werden.

2. Rohrklemme (1) nach Anspruch 1, **dadurch gekennzeichnet, dass** die Klemmschelle (4) mit dem Klemmabschnitt (5) in Verschlusslage kraftschlüssig direkt an der Aussenseite (32) des Rohrs (2) anliegt.

3. Rohrklemme (1) nach Anspruch 1, **dadurch gekennzeichnet, dass** die Rohrklemme (1) weiterhin mindestens eine Spannhülse (10) umfasst, auf welche der Klemmabschnitt (5) einwirkt und über welche die Klemmschelle (4) in Verschlusslage indirekt an der Aussenseite (32) des Rohrs (2) anliegt, oder dass die Rohrklemme (1) weiterhin mindestens zwei, insbesondere genaue zwei, Spannhülsen (10) umfasst, auf welche der Klemmabschnitt (5) einwirkt und über welche die Klemmschelle (4) in Verschlusslage indirekt an der Aussenseite (32) des Rohrs (2) anliegt.

4. Rohrklemme (1) nach Anspruch 3, **dadurch gekennzeichnet, dass** die Spannhülse (10) plastisch deformierbar ausgebildet ist.

5. Rohrklemme (1) nach einem der vorhergehenden Ansprüche, **dadurch gekennzeichnet, dass** die Klemmabschnitte (5) der Klemmschelle (4) mindestens zwei oder genau zwei beabstandet zueinander angeordnete Klemmringe (13) sind, welche Klemmringe (13) über einen Verbindungsabschnitt (6) miteinander in Verbindung sind, wobei der Klemmring (13) vorzugsweise einen runden oder rechteckigen Querschnitt aufweist.

6. Rohrklemme (1) nach einem der vorhergehenden Ansprüche, **dadurch gekennzeichnet, dass** die Verbindungsabschnitte (6) und/oder die Endbereiche (11) der Klemmschelle (4) auf den Führungsfläche (15) geführt werden.

7. Rohrklemme (1) nach einem der vorhergehenden Ansprüche, **dadurch gekennzeichnet, dass** das Zwischenelement (7) separat von der Klemmschelle (4) ausgebildet ist.

8. Rohrklemme (1) nach einem der vorhergehenden Ansprüche, **dadurch gekennzeichnet, dass** das Zwischenelement (7) zwischen der mindestens einen Spannhülse (10) und der Klemmschelle (4) liegt, wobei das Zwischenelement (7) so an der Rohrklemme (1) gelagert ist.

9. Rohrklemme (1) nach einem der vorhergehenden Ansprüche, **dadurch gekennzeichnet, dass** die Rohrklemme (1) weiter ein Gehäuse (14) umfasst, in oder an welchem die Klemmschelle (4) ggf. die Spannhülse (10) ggf. das Zwischenelement (7) gelagert sind.

10. Rohrklemme (1) nach einem der vorhergehenden Ansprüche, **dadurch gekennzeichnet, dass** die Klemmschelle (4) integraler Bestandteil der Rohrklemme (1) ist.

## Claims

1. A tube clamp (1) for connecting a tube (2) comprising
a connecting piece (3) that can be inserted into one end of the tube (2),
a clamping collar (4) with an annular clamping section (5) extending at least in sections, preferably completely, around the connecting piece (3), wherein the clamping collar (4) can be brought from an initial position into a clamping position by means of a pressing operation,
wherein the clamping section (4) is plastically deformable during the pressing operation such, that a radial force against the tube (2) or the connecting piece (3) can be provided,
wherein the tube clamp (1) further comprises an intermediate element (7),
**characterized in that** the intermediate element (7) comprises at least two guide surfaces (15) extending from a central web (30), wherein the clamping collar (4) rests against the guide surfaces (15) at least with its end regions (11), and wherein the radial distance of the guide surface (15) to the middle axis (M) increases with increasing distance from a limiting edge (12) to the central web (30), such that the clamping collar (4) experiences a change in diameter when the end regions (11) are moved from the initial position in the region of the limiting edge (12) into their clamping position in the region of the central web (30).

2. The tube clamp (1) according to claim 1, **characterized in that** the clamping collar (4) with the clamping section (5) directly rests against the outside (32) of the tube (2) in a force-locking manner in the closed position.

3. The tube clamp (1) according to claim 1, **characterized in that** the tube clamp (1) further comprises at least one clamping sleeve (10) on which the clamping section (5) acts on and by means of which the clamping collar (4) indirectly rests against on the outside (32) of the tube (2) in the closed position, or that the tube clamp (1) further comprises at least two, in particular exactly two, clamping sleeves (10) on which the clamping section (5) acts on and by means of which the clamping collar (4) indirectly rests against on the outside (32) of the tube (2).

4. The tube clamp (1) according to claim 3, **characterized in that** the clamping sleeve (10) is designed plastically deformable.

5. The tube clamp (1) according to any one of the preceding claims, **characterized in that** the clamping sections (5) of the clamping collar (4) are at least two or exactly two clamping rings (13) arranged at a distance to one another, which clamping rings (13) are in connection with each other via a connecting section (6), wherein the clamping ring (13) preferably comprises a round or rectangular cross-section.

6. The tube clamp (1) according to any one of the preceding claims, **characterized in that** the connecting sections (6) and/or the end regions (11) of the clamping collar (4) are guided on the guide surfaces (15).

7. The tube clamp (1) according to any one of the preceding claims, **characterized in that** the intermediate element (7) is formed separately from the clamping collar (4).

8. The tube clamp (1) according to any one of the preceding claims, **characterized in that** the intermediate element (7) is positioned between the at least one clamping sleeve (10) and the clamping collar (4), wherein the intermediate element (7) is thereby mounted on the tube clamp (1).

9. The tube clamp (1) according to any one of the preceding claims, **characterized in that** the tube clamp (1) further comprises a housing (14), in or on which the clamping collar (4) and if applicable the clamping sleeve (10) and if applicable the intermediate element (7) are mounted.

10. The tube clamp (1) according to any one of the preceding claims, **characterized in that** the clamping collar (4) is an integral component of the tube clamp (1).

## Revendications

1. Collier de serrage (1) pour relier un tube (2) comprenant
une pièce de raccordement (3) pouvant être emboitée dans une extrémité du tube (2),
une bride de serrage (4) présentant au moins une section de serrage annulaire (5) entourant au moins en partie, préférablement entièrement la pièce de raccordement (3),
où la bride de serrage (4) peut être amenée depuis une position de départ vers une position de serrage au moyen d'un procédé de compression,
où la bride de serrage (4) peut être déformée lors du procédé de compression de manière plastique, de sorte qu'une force radiale peut être mise à disposition contre le tube (2) respectivement la pièce de raccordement (3),
où le collier de serrage (1) comprend en outre un élément intermédiaire (7) **caractérisé en ce que**
l'élément intermédiaire (7) présente aux moins deux surfaces de guidage (15) s'étendant à partir d'une entretoise centrale (30), où la bride de serrage (4) est en butée contre les surfaces de guidage (15) avec au moins ses domaines d'extrémité (11) et où la distance radiale de la surface de guidage (15) par rapport à l'axe central (M) augmente avec une distance augmentante depuis un bord de délimitation (12) par rapport à l'entretoise centrale (30), de sorte que le bride de serrage (4) subit un changement de diamètre lorsque les domaines d'extrémité (11) sont déplacés depuis leur position de départ dans le domaine du bord de délimitation (12) vers leur position de serrage dans le domaine de l'entretoise centrale (30).

2. Le collier de serrage (1) selon la revendication 1, **caractérisé en ce que** la bride de serrage (4) est directement en butée par friction contre le côté extérieur (32) du tube (2) avec la section de serrage (5) dans la position de fermeture.

3. Le collier de serrage (1) selon la revendication 1, **caractérisé en ce que** le collier de serrage (1) comprend en outre au moins une douille de serrage (10), sur laquelle la section de serrage (5) agit et à travers de laquelle la bride de serrage (4) est directement en butée contre le côté extérieur (32) du tube (2), ou que le collier de serrage (1) comprend un outre au moins deux, en particulier exactement deux, douilles de serrage (10), sur lesquelles la section de serrage (5) agit et à travers desquelles la bride de serrage (4) est directement en butée contre le côté extérieur (32) du tube (2).

4. Le collier de serrage (1) selon la revendication 3, **caractérisé en ce que** la douille de serrage (10) est formée de manière plastiquement déformable.

5. Le collier de serrage (1) selon une des revendications précédentes, **caractérisé en ce que** les sections de serrage (5) de la bride de serrage (4) sont au moins deux ou exactement deux anneaux de serrage (13) disposés de manière espacée l'un par rapport à l'autre, lesquels anneaux de serrage (13) sont raccordés l'un à l'autre à travers une section de raccord (6), où l'anneau de serrage (13) présente préférablement une section circulaire ou rectangulaire.

6. Le collier de serrage (1) selon une des revendications précédentes, **caractérisé en ce que** les sections de raccord (6) et / ou les domaines d'extrémité (11) de la bride de serrage (4) sont guidés sur les surfaces de guidage (15).

7. Le collier de serrage (1) selon une des revendications précédentes, **caractérisé en ce que** l'élément intermédiaire (7) est formé de manière séparée de la bride de serrage (4).

8. Le collier de serrage (1) selon une des revendications précédentes, **caractérisé en ce que** l'élément intermédiaire (7) se situe entre l'au moins une douille de serrage (10) et la bride de serrage (4), où l'élément intermédiaire (7) est monté sur le collier de serrage (1) de telle sorte.

9. Le collier de serrage (1) selon une des revendications précédentes, **caractérisé en ce que** le collier de serrage (1) comprend en outre un boîtier (14), sur lequel ou au niveau duquel la bride de serrage (4), éventuellement la douille de serrage (10) ou éventuellement l'élément intermédiaire (7) sont montés.

10. Le collier de serrage de tube (1) selon une des revendications précédentes, **caractérisé en ce que** la bride de serrage (4) forme une partie intégrale du collier de serrage (1).
